# EUROPÄISCHE PATENTSCHRIFT

(11) **EP 2 233 413 B1**
(45) Veröffentlichungstag und Bekanntmachung des Hinweises auf die Patenterteilung: **06.06.2012**
(21) Anmeldenummer: 10005616.7
(22) Anmeldetag: 15.08.2007
(51) Int. Cl.: B65G 47/84

(54) **Verfahren und Vorrichtung zur Überführung von hohlen zylindrischen Gegenständen**
Method and device for transferring hollow cylindrical objects
Procédé et dispositif de transfert d'objets cylindriques creux

(30) Priorität: 15.08.2006 DE 102006038321; 24.11.2006 DE 102006055962
(43) Veröffentlichungstag der Anmeldung: 29.09.2010
(62) Teilanmeldung aus: 07801665.6
(73) Patentinhaber: SIDEL PARTICIPATIONS, S.A.S., 76930 Octeville-sur-Mer (FR)
(72) Erfinder: Klaiber, Franz, 78564 Wehingen (DE); Novak, Peter, 8274 Tägerwilen (CH)
(74) Vertreter: Weiss, Peter

(56) Entgegenhaltungen:
- EP-A- 0 093 015
- DE-A1- 3 626 734

## Beschreibung

Die Erfindung betrifft eine Vorrichtung zur Überführung von hohlen zylindrischen Gegenständen, insbesondere von Preforms und PET-Flaschen gemäss dem Oberbegriff von Anspruch 1 sowie eine Verwendung hierfür.

### STAND DER TECHNIK

Die vorliegenden Erfindung bezieht sich vor allem auf die Herstellung von PET-Flaschen, wobei in einem Vorverfahren in einer Spritzgiessmaschine Preforms hergestellt werden, die dann in einer Blasmaschine zu PET-Flaschen aufgeblasen werden. Diese PET-Industrie ist ein hoch-technologisierter Tätigkeitsbereich der Verpackungsindustrie. In aufwendigen Schritten entstehen PET-Flaschen in allen möglichen Formen, Grössen und Farben. Zwischen den einzelnen Bearbeitungsstationen müssen die Preforms bzw. PET-Flaschen hin und her transportiert und ggf. behandelt werden. Ein Teil einer derartigen Anlage ist beispielsweise in der PCT/EP2006/008772 beschrieben. Der Transport der hohlen zylindrischen Gegenstände geschieht durch beliebige Transporteinrichtungen, wie beispielsweise Führungsstreifen, Bänder, Schlitten, Schienen usw.. Liegt dabei beispielsweise in einer Bearbeitungsstation eine Fehlfunktion vor, so kann es zu erheblichen Stauungen kommen. In diesem Fall werden bislang die Gegenstände aus dem Zyklus über eine Weiche od. dgl. ausgeleitet und in einen Zwischenspeicher zwischengespeichert. Dies ist aufwendig und zeitraubend.

Aus der EP 0 093 015 A geht ein Verfahren zum Umsetzen eines hohlen Gegenstandes mit zylindrischer Seitenwand von einer Entladestation zu einer Empfangsstation durch axiales Ausrichten des Gegenstandes in der Entladestation in Richtung zur Empfangsstation, axiales Auswerfen des Gegenstandes in der Entladestation in Richtung Empfangsstation und Festhalten des Gegenstandes an der Empfangsstation hervor. Das Verfahren ist dadurch gekennzeichnet, dass der Gegenstand durch pneumatischen Druck ausgeworfen und an der Empfangsstation bei seiner Ankunft durch Saugkraft so festgehalten wird, dass die zylindrische Seitenwand des Gegenstandes mit einer teilzylindrischen Oberfläche in Gleitreibungskontakt kommt und die teilzylindrische Oberfläche mit engem Sitz an der zylindrischen Seitenwand des Gegenstandes angreift um ihn festzuhalten. Die EP 0093 015 A offenbart eine Vorrichtung gemäß dem Oberbegriff des Anspruchs 1.

Die DE 36 26 734 A1 offenbart eine Maschine zum Füllen von Hülsen und zum Verschliessen derselben. Sie weist im wesentlichen vier Stationen auf, nämlich eine Hülsenzuführungsstation, eine Stopfenzuführungsstation, eine Produktdosierungsstation und eine Verschliessstation.

### AUFGABE

Aufgabe der vorliegenden Erfindung ist es, eine Vorrichtung der o.g. Art zu schaffen, welche einen hohen Beitrag zur Verbesserung des Transports von Preforms und PET-Flaschen zwischen den einzelnen Bearbeitungsstationen gewährleistet und welche die gesamte Anlage den gestiegenen Marktanforderungen an eine höhere Verfügbarkeit der Gegenstände anpasst.

### LÖSUNG DER AUFGABE

Zur Lösung der Aufgabe führen die Merkmale gemäss dem kennzeichnenden Teil von Anspruch 1 sowie dem zugeordneten Verwendungsanspruch 7.

Das bedeutet, dass Preforms und PET-Flaschen völlig losgelöst von der Zufuhreinrichtung bzw. der Abführeinrichtung separat in der Übergabeeinrichtung sicher gehalten werden, so dass beispielsweise bei einem Stau in der Abführeinrichtung diese Übergabeeinrichtung angehalten werden kann, ohne dass ein Staudruck in der Abführeinrichtung aufgebaut wird.

Dank der entsprechenden Vorrichtung ist es möglich, einen Preformstrom frei von Staudruckkräften in definierter Lage an eine nachfolgende Einrichtung weiterzugeben. Auch die Übernahme eines Preformstromes ist mit einfachen Bauteilen möglich.

Für das Halten des zylindrischen Gegenstandes in oder an der Übergabeeinrichtung sind zwei Möglichkeiten denkbar. Erfindungsgemäß gescheht dies durch einen Saugdruck, der beispielsweise in einer Bohrung auf den zylindrischen Körper einwirkt, Gemäß einer nicht zur beanspruchten Erfindung gehörenden möglichkeit gescheht dies durch einen mechanischen Haltedruck.

Gerade für Preforms hat diese Halterung gegenüber früheren Systemen den Vorteil, dass die Preforms nicht am Kopf bzw. an der Neckring-Partie gehalten werden, sondern am definierten Teil des Körpers. Hierdurch ist zum einen die Halterung verbessert, zum anderen findet auch kein Verformen des Kopfteils bzw. der Neckring-Partie statt.

Da die Preforms bzw. PET-Flaschen während dem gesamten Eintakt- und Übergabevorgang am Körper gehalten werden, ist während diesem Vorgang die freie Sicht auf die Gegenstände nicht eingeschränkt. Dieser Umstand ermöglicht es, die Übergabeeinrichtung mit weiteren notwendigen Arbeitsstationen (beispielsweise Sichter, Ausblaser) zu kombinieren und u.U. damit die Arbeitsschritte in die eigentliche Kernaufgabe (Bereitstellung von Preforms) zu integrieren. Dies wird weiter unten noch näher ausgeführt.

Das Halten muss auch nicht unbedingt in der Übergabeeinrichtung geschehen, sondern die Übergabeeinrichtung kann auf ihrer Oberfläche entsprechend ausgebildete Mulden aufweisen, in denen der zylindrische Körper liegt. Die pneumatische Halterung sollte kurz vor dem Angriff der Abführeinrichtung zumindest teilweise wieder aufgehoben werden können.

Ein besonderes Augenmerk der Erfindung ist darauf gerichtet, dass der zylindrische Körper während seines Aufenthaltes in der Übergabeeinrichtung auch behandelt oder optischen Inspektionen unterzogen werden kann. Dies kann durch Aufbringen entsprechender Behandlungsmittel erfolgen, da der zylindrische Körper in der Übergabeeinrichtung frei zugänglich ist. Beispielsweise kann ein Hohlraum in dem zylindrischen Körper ausgeblasen oder mit einem Behandlungsmittel besprüht werden.

Die entsprechende Vorrichtung sieht in einem ersten Ausführungsbeispiel vor, dass ein zylindrisches Rad, welches um eine Achse dreht, mit den Bohrungen bzw. Mulden versehen ist. Die Bohrungen verlaufen dabei von einer Mantelfläche des Rades radial nach innen, wobei sie bevorzugt mit einer Stufe versehen sind. Diese Stufe verjüngt die Bohrung zu einem Durchmesser, welcher kleiner ist als der Durchmesser des zylindrischen Körpers. Hierdurch wird gewährleistet, dass der zylindrische Körper nicht zu tief in die Bohrung eingezogen wird. Die Bohrung kann im übrigen auch nur konisch ausgestaltet sein.

Die Bohrung mündet im Inneren des Rades in einen segmentartigen Raum aus, der mit einer Vakuumquelle in Verbindung steht. Die Bohrungen sind nicht immer mit dem segmentartigen Raum verbunden, d.h., sie stehen nicht bei ihrer gesamten Umdrehung mit der Vakuumquelle in Verbindung. Aus diesem Grunde ist auch der Raum segmentartig ausgebildet und Teil eines Ringraums, wobei der übrige Teil für die Vakuumquelle nicht zugänglich ist. Dieser übrige Teil verschliesst die Bohrungen, so dass dort das Vakuum aufgehoben ist und die zylindrischen Körper aus der Bohrung entnommen werden können.

Der Umfang bzw. das Ausmass des segmentartigen Raumes ist veränderbar, so dass Wünschen nach seinem Ausmass genügend Rechnung getragen werden kann. Dies geschieht durch einen entsprechenden Sperrflügel oder Sperrschieber.

Auch für die nicht zur beanspruchten Erfindung gehörende mechanische Halterung sind mehrere Möglichkeiten denkbar, von denen vorliegend nur einige beschrieben werden sollen. So können zwei Scheiben übereinander bzw. nebeneinander angeordnet. Der zylindrische Gegenstand wird dann zwischen diesen beiden Scheiben aufgenommen, von der Zufuhreinrichtung abgezogen und zur Überführeinrichtung gebracht. Dabei ist einmal vorgesehen, zumindest eine Scheibe elastisch auszubilden, so dass sie beispielsweise durch einen Niederhalter in einem bestimmten Bereich auf den zylindrischen Gegenstand gedrückt werden kann.

Die Scheiben haben keine gemeinsame Achse, sondern zwei getrennte Drehachsen, die in einem Winkel zueinander angestellt sind. Hierdurch ist die Klemmkraft der beiden Scheiben über den ganzen Umlenkwinkel nicht gleich gross. Die zylindrischen Gegenstände werden sanft zwischen den Scheiben aufgenommen und auch wieder sanft abgegeben, dazwischen aber streng gehalten.

Die Halterung der zylindrischen Gegenstände wird noch dadurch verbessert, wenn zumindest eine, bevorzugt jede Scheibe auf ihrer Innenfläche mit einem elastischen Ring belegt ist. Dieser Ring ist um die Drehachse angeordnet.

Weiterhin können über zumindest einer der Scheiben eine Vielzahl von einzelnen Blattfedern segmentartig um die Drehachse angeordnet sein. In diesem Fall können beide Scheiben zusammenhängen und bilden zwischen sich einen Raum zur Aufnahme der zylindrischen Gegenstände aus. Die eigentliche Halterung wird von den Blattfedern übernommen. Ähnlich wie oben bei der elastischen Scheibe beschrieben, wird den Blattfedern in einem bestimmten Bereich ein Niederhalter zugeordnet, der die Blattfedern nach unten gegen die zylindrischen Gegenstände drückt. In diesem Fall wirkt die eine Scheibe als Anschlagscheibe und begrenzt den Auslenkwinkel für die Blattfedern.

In vielen Fällen kann es auch wünschenswert sein, wenn die zylindrischen Gegenstände bereits bei der Übernahme in der Übergabeeinrichtung zusätzlich von einem Transportelement gehalten werden, welches die zylindrischen Gegenstände nach der Übergabeeinrichtung auch weiter, insbesondere linear transportiert. Dies wird durch einen Riemen bewirkt, der mit Öffnungen versehen ist, die mit den Bohrungen in dem Ansaugrad der Übergabeeinrichtung übereinstimmen. Dieser Riemen umschlingt das Ansaugrad in der Übergabeeinrichtung über den grössten Teil seines Umfanges, so dass die zylindrischen Gegenstände zuerst durch die Öffnung des Riemens und dann in die Bohrungen in dem Ansaugrad eindringen. Beim Verlassen der Übergabeeinrichtung werden die zylindrischen Gegenstände durch den Riemen aus den Bohrungen gezogen, verbleiben aber in den Öffnungen des Riemens und werden durch den Riemen weitertransportiert.

Eine verbesserte Halterung der zylindrischen Gegenstände wird bei diesem Ausführungsbeispiel noch dadurch bewirkt, dass von dem Riemen seitlich von den Öffnungen Klemmlamellen abstehen. Diese bewirken zum einen, dass die zylindrischen Gegenstände nicht allzu tief in die Bohrungen des Rades eindringen. Dies wird noch dadurch unterstützt, dass die zylindrischen Gegenstände durch entsprechende Stützschalen an beispielsweise einem Halsring gehalten werden. Zum anderen öffnet sich der Winkel der Klemmlamellen im Bereich des Rades, so dass die zylindrischen Gegenstände dazwischen geschoben werden können. Bewegt sich dann das entsprechende Teilstück des Riemens wieder linear, so wird der Öffnungswinkel der Lamellen wieder verkleinert und die zylindrischen Gegenstände werden dazwischengeklemmt und in ihrer Position gehalten.

Bevorzugt ist vorgesehen, dass die Mantelfläche des Rades mit einer Zahnung belegt und der Riemen als Zahnriemen ausgebildet ist. Hierdurch wird insbesondere die Übereinstimmung der Öffnung des Riemens mit den Bohrungen des Zahnrades gewährleistet, somit ist ein Eintakten möglich.

Um Staudruckkräften entgegenwirken zu können, ist die Übergabeeinrichtung über eine Rutschkupplung mit einem entsprechenden Antrieb verbunden. Die Rutschkupplung wird in einem einfachen Ausführungsbeispiel dadurch bewirkt, dass um die Drehachse des Rades bzw. der Scheiben ein Rundriemen als Antriebsriemen geschlungen ist.

Des weiteren bietet es sich an, der Übergabeeinrichtung eine Einrichtung zum Behandeln der Gegenstände zuzuordnen bzw. nachzuordnen. Durch die oben beschriebene freie Sicht und den freien Zugang auf den Preform-Kopf und die Preform-Öffnung während dem Eintakt-/Übergabevorgang besteht die Möglichkeit, die Preforms und natürlich ähnlich auch die PET-Flaschen mit einer entsprechenden Behandlungseinrichtung innen zu reinigen (auszublasen) und damit den wachsenden Marktanforderungen gerecht zu werden. Neben dem Reinigungsvorgang ist es auch möglich, die Gegenstände zu ionisieren und/oder optisch zu prüfen.

Dabei soll nicht unerwähnt bleiben, dass durch das oben erwähnte Ansaugen der zylindrischen Gegenstände im Ansaugrad durch den Unterdruck in den radialen Bohrungen auch allfällige Schmutzpartikel an der Aussenhülle des zylindrischen Gegenstandes entfernt werden. Damit wird vermieden, dass in den Blasformen der nachfolgenden Streckblasmaschine solche Verunreinigungen zu einer schlechten Oberflächenqualität der PET-Flaschen führen.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer erfindungsgemässen Vorrichtung zur Überführung von Gegenständen mit einem zylindrischen Körper von einer Zufuhreinrichtung zu einer Abführeinrichtung;
Figur 2 einen horizontalen Schnitt durch die Vorrichtung gemäss Figur 1;
Figur 3 eine perspektivische Ansicht eines Teils der erfindungsgemässen Vorrichtung in einer weiteren Ausführungsform;
Figur 4 einen Horizontalschnitt durch den Teil der Vorrichtung gemäss Figur 3;
Figur 5 einen Horizontalschnitt durch ein weiteres Ausführungsbeispiel eines Ansaugrades;
Figur 6 eine perspektivische Ansicht eines weiteren Ausführungsbeispiels einer erfindungsgemässen Vorrichtung entsprechend Figur 1;
Figur 7 einen Horizontalschnitt durch das Ausführungsbeispiel der Vorrichtung gemäss Figur 6;
Figur 8 eine perspektivische Ansicht eines weiteren Ausführungsbeispiels einer Vorrichtung entsprechend Figur 1;
Figur 9 einen Horizontalschnitt durch das Ausführungsbeispiel der erfindungsgemässen Vorrichtung gemäss Figur 8;
Figur 10 einen Horizontalschnitt durch einen Teil der Vorrichtung entsprechend Figur 2, jedoch mit anderen Gegenständen;

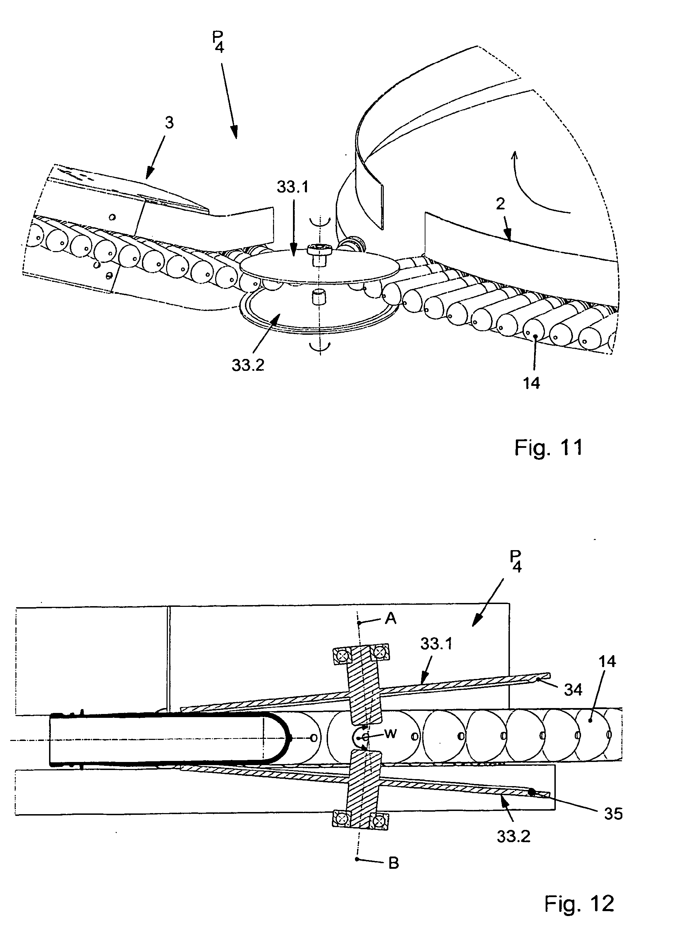

Figur 11 eine perspektivische Ansicht eines weiteren nicht zur beanspruchten Erfindung gehörenden Ausführungsbeispiels ;
Figur 12 einen Schnitt durch die Vorrichtung gemäss Figur 11;

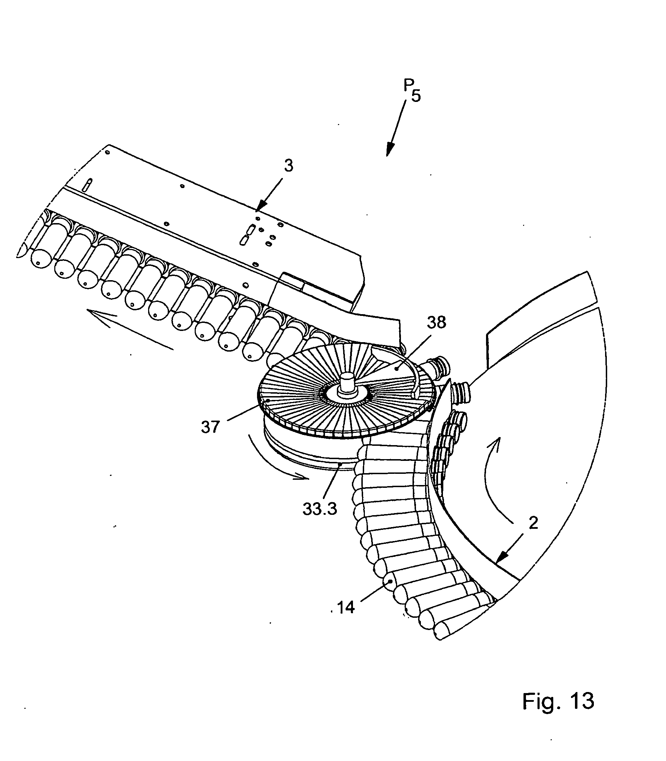

Figur 13 eine perspektivische Ansicht eines weiteren nicht zur beanspruchten Erfindung gehörenden Ausführungsbeispiels;

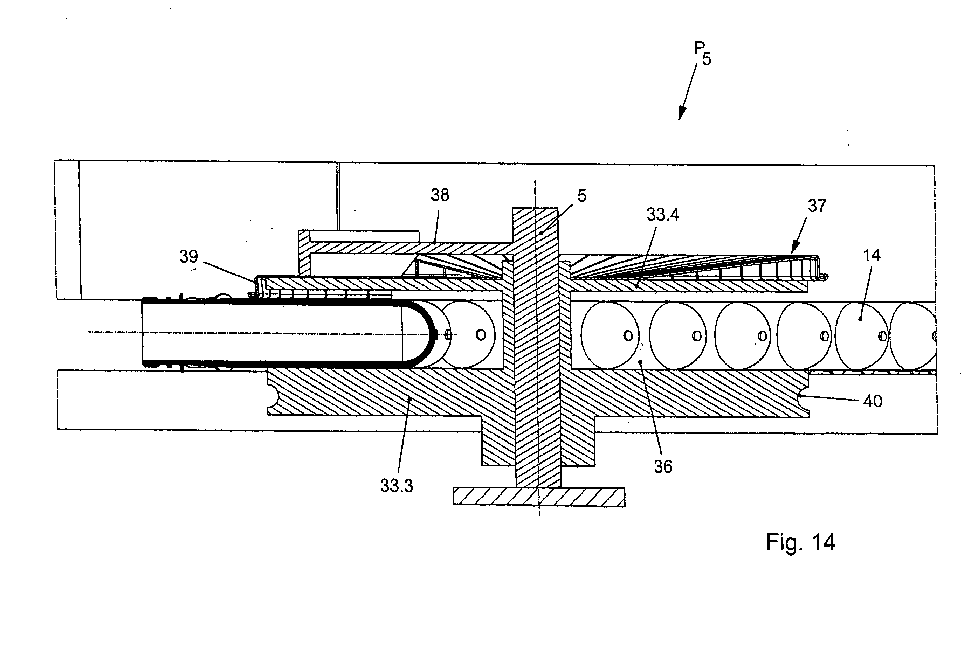

Figur 14 einen Schnitt durch die Vorrichtung gemäss Figur 13;
Figur 15 eine perspektivische Ansicht einer weiteren möglichen Ausbaustufe im Bereich des Ansaugrades;
Figur 16 eine Schnittdarstellung einer weiteren Ausbaustufe der erfindungsgemässen Vorrichtung mit einer Behandlungseinrichtung.

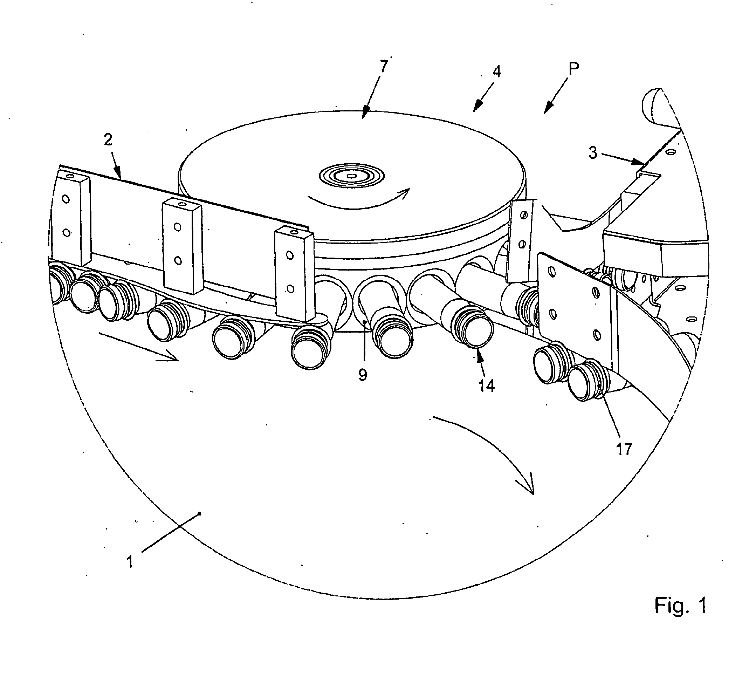

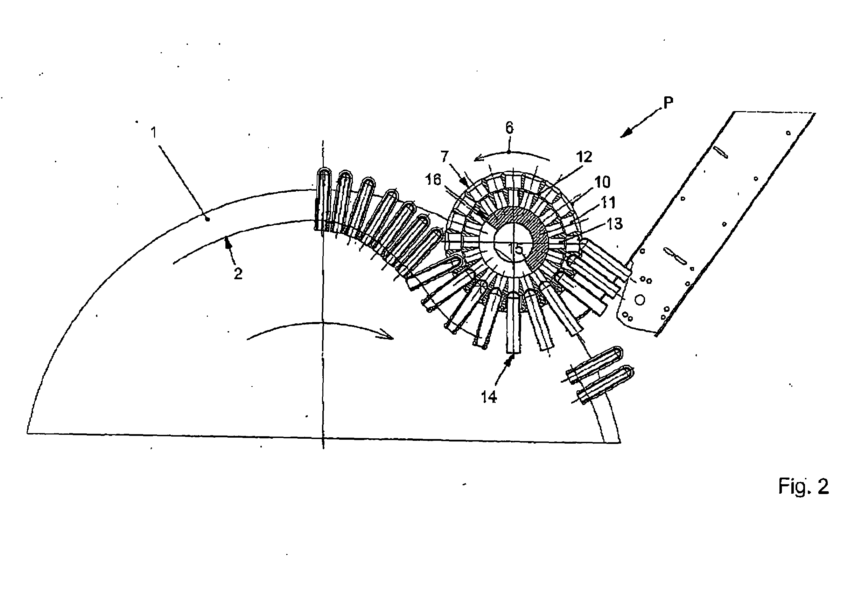

Ein erstes Ausführungsbeispiel einer erfindungsgemässen Vorrichtung P zur Überführung von zylindrischen Körpern, in diesem Fall Preforms, ist in den Figuren 1 und 2 gezeigt. Hierbei befindet sich über einer rotierenden Scheibe 1, wie sie in der PCT/EP2006/008772 beschrieben ist, zwischen einer Zufuhreinrichtung 2 und einer Abführeinrichtung 3 eine Übergabeeinrichtung 4. Diese Übergabeeinrichtung 4 ist als Ansaugrad ausgebildet, welches um eine Achse 5 dreht. Die Drehrichtung wird durch den Pfeil 6 angedeutet.

Das Ansaugrad 7 besitzt eine äussere Mantelfläche 8, in die eine Mehrzahl von Bohrungen 9 eingeformt ist. Diese Bohrungen 9 verlaufen von der Mantelfläche 8 radial in das Innere des Rades 7, wie dies in Figur 2 erkennbar ist. Dabei besitzt jede Bohrung 9 eine etwas oval ausgebildete Öffnung 10, an die eine Aufnahmekammer 11 anschliesst, die nach einer Stufe 12 in einen Bohrungsabschnitt 13 übergeht. Dieser Bohrungsabschnitt 13 besitzt einen Durchmesser, der geringer als derjenige der Aufnahmekammer 11 und geringer als ein Durchmesser eines Preforms 14 ist.

Im Inneren des Rades 7 befindet sich ein stillstehender kreissegmentartiger Raum 15, der, nicht näher gezeigt, mit einer Vakuumquelle in Verbindung steht. Der kreissegmentartige Raum 15 ist Teil eines Ringraumes 16, um den das Ansaugrad 7 dreht, wobei der restliche Teil des Ringraumes 16 allerdings geschlossen ist und nicht mit der Vakuumquelle in Verbindung steht.

Die Funktionsweise der vorliegenden Erfindung ist folgende:

Die Preforms werden auf der Scheibe 1 vereinzelt und von der Zuführeinrichtung 2 abgenommen, wie dies in der PCT/EP2006/008772 beschrieben ist. Sobald sie in den Bereich der sich drehenden Übergabeeinrichtung 4 gelangen, werden die Preforms 14 mit ihren Enden von den Bohrungen 9 aufgenommen, was durch die ovale Ausgestaltung der Öffnung 10 erleichtert wird. Die Aufnahme geschieht in einem Bereich, in welchem die Bohrungen 9 mit dem segmentartigen Raum 15, d.h., mit der Vakuumquelle verbunden sind. Hierdurch werden die Preforms 14 unter Saugdruck gehalten und können nun das Ende der Zufuhreinrichtung erreichen, an dem die Preforms 14 freigegeben werden. Im Anschluss daran werden sie in den Bohrungen 9 form- und/oder kraftschlüssig gehalten.

Nach einer weiteren Drehung gelangen die Preforms 14 in den Bereich der Abführeinrichtung 3, in dem sie wieder von entsprechenden Schienenstreifen unterhalb ihres Neckringes 17 aufgenommen werden. Gleichzeitig gelangen die Bohrungen 9 aus dem Bereich des segmentartigen Raumes 15 in den geschlossenen Bereich des Ringraumes 16, so dass kein Anschluss an eine Vakuumquelle mehr besteht und die Preforms 14 freigegeben sind. Die Stufe 12 in der Bohrung 9 gewährleistet, dass die Preforms nur in einer definierten Tiefe in die Bohrung 9 eingesaugt werden, so dass der aus der Bohrung herausstehende Bereich des Preforms immer die gleiche Länge hat. Hierdurch wird eine gesicherte Übergabe an die Abführeinrichtung ermöglicht.

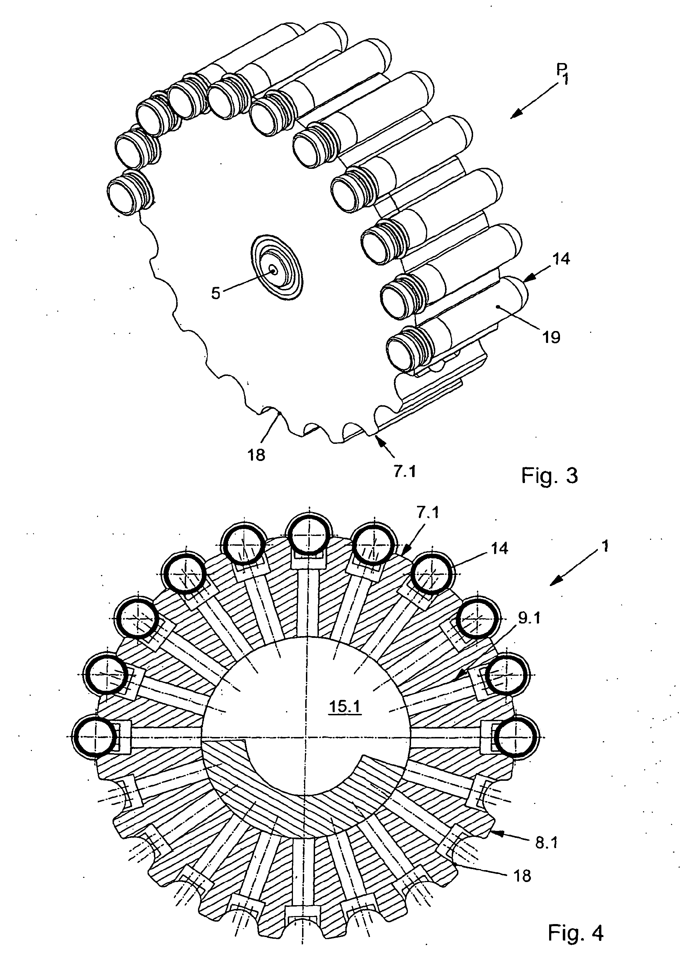

In einer weiteren Ausführungsform einer erfindungsgemässen Vorrichtung P1 gemäss den Figuren 3 und 4 sind in eine Mantelfläche 8.1 eines Rades 7.1 eine Mehrzahl von Mulden 18 eingeformt, die in etwa parallel zur Achse 5 verlaufen und der Aufnahme eines Grossteils der Mantelfläche 19 des Preforms dienen. Hierbei dienen Bohrungen 9.1 nicht der Aufnahme des Preforms 14, sondern nur dem Anlegen eines Vakuums. Zu diesem Zweck sind die Bohrungen 9.1 mit einem Raum 15.1 verbindbar, wobei der Raum 15.1 mit einer Vakuumquelle in Verbindung steht.

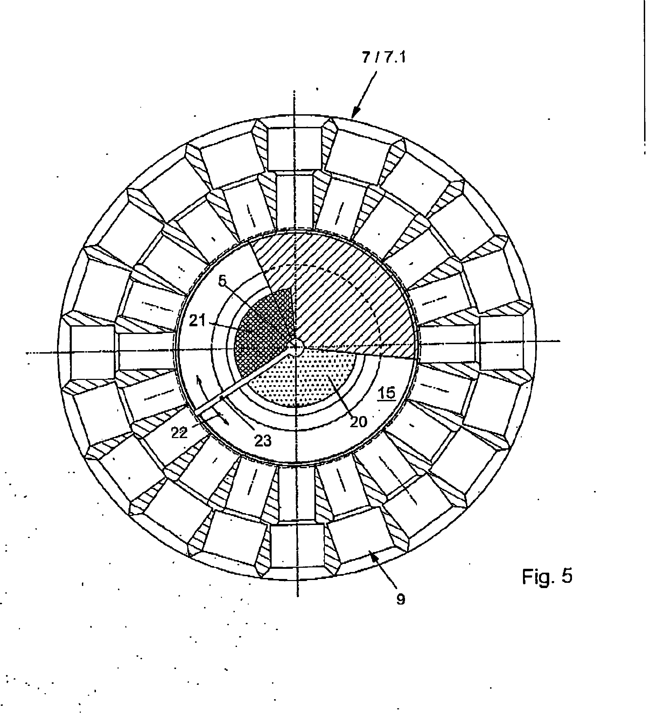

In Figur 5 ist die Möglichkeit aufgezeigt, den Raum 15 innerhalb des Ringraumes 16 definiert zu verstellen und dadurch auf geeignete Weise das Vakuum den gewünschten Bohrungen 9 zuzuordnen. Der Raum 15, der gleichzeitig den Unterdruckbereich ausbildet, wird durch Schiebeöffnungen 20 zum Vakuumbereich geöffnet, wobei um die Achse 5 ein Sperrflügel 21 drehen kann, der, je nach Wunsch, diese Schiebeöffnung 20 verschliesst. Die Drehbarkeit wird durch einen Doppelpfeil 22 angedeutet, wobei dabei auch eine Wand 23 des Raumes 15 und ein Absperrboden des Sperrflügels 21 mitbewegt wird.

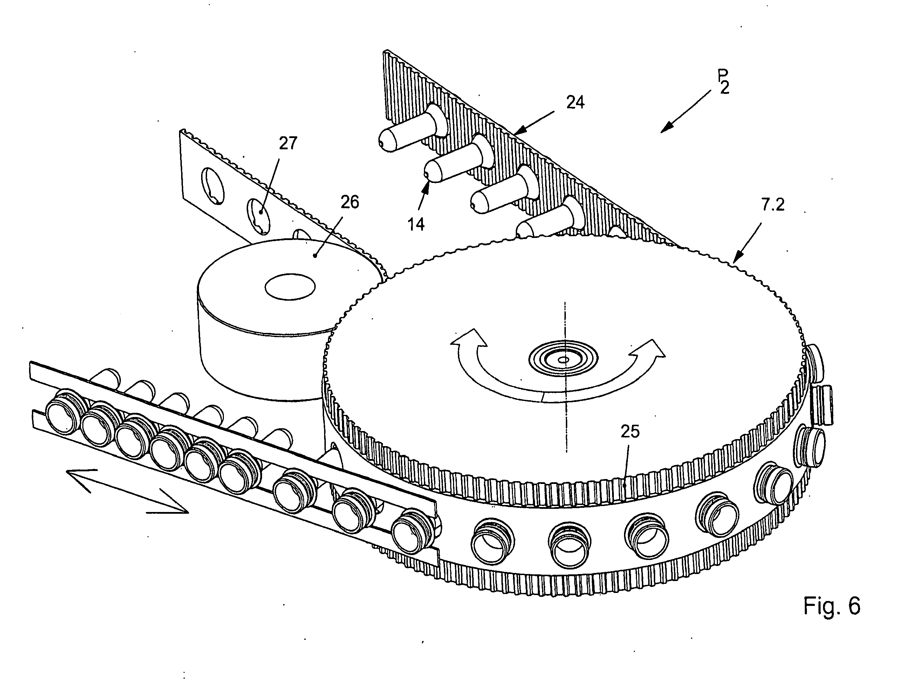

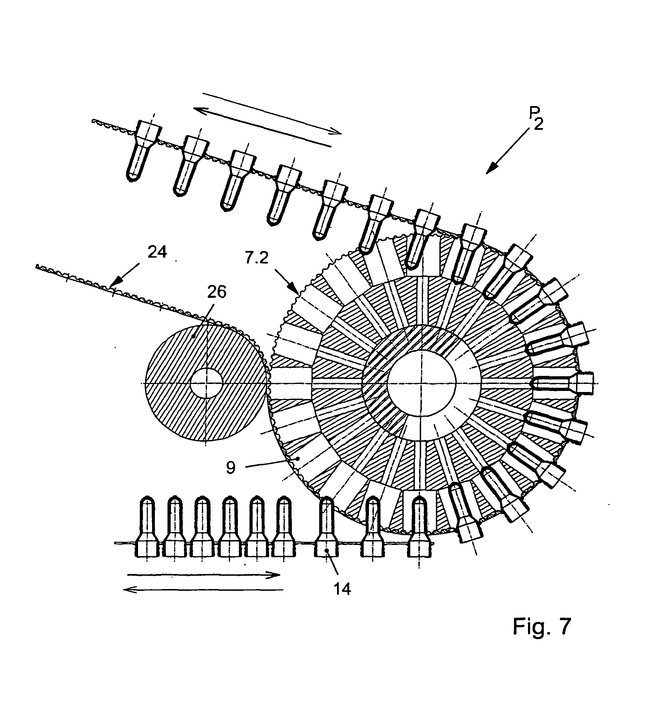

Gemäss den Figuren 6 und 7 wird bei einer weiteren Vorrichtung P2 zur Überführung von zylindrischen Körpern ein Ansaugrad 7.2 von einem Zahnriemen 24 teilweise umschlungen. Dieser Zahnriemen 24 wirkt mit einer Zahnung 25 zusammen, die in die Mantelfläche des Ansaugrades 7.2 eingeformt ist. Eine Stützrolle 26 gewährleistet ein vorzeitiges Anlegen des Zahnriemens 24 an die gezahnte Mantelfläche des Rades 7.2. In den Zahnriemen 24 sind Öffnungen 27 eingeformt, welche nach dem Anlegen des Zahnriemens 24 an das Ansaugrad 7.2 mit den Bohrungen 9 fluchten.

Dieses Ausführungsbeispiel hat den Vorteil, dass die Preforms 14 beim Verlassen der Übergabeeinrichtung, d.h. des Rades 7.2 von dem Zahnriemen 24 aus den Bohrungen 9 gezogen werden. Sie brauchen auch nicht sofort an eine Abführeinrichtung 3 übergeben zu werden, sondern können noch über eine beliebige Strecke in den Öffnungen 27 des Zahnriemens 24 verbleiben. Beispielsweise können die Preforms 14 dort einer Behandlung unterzogen werden, wie dies später beschrieben wird.

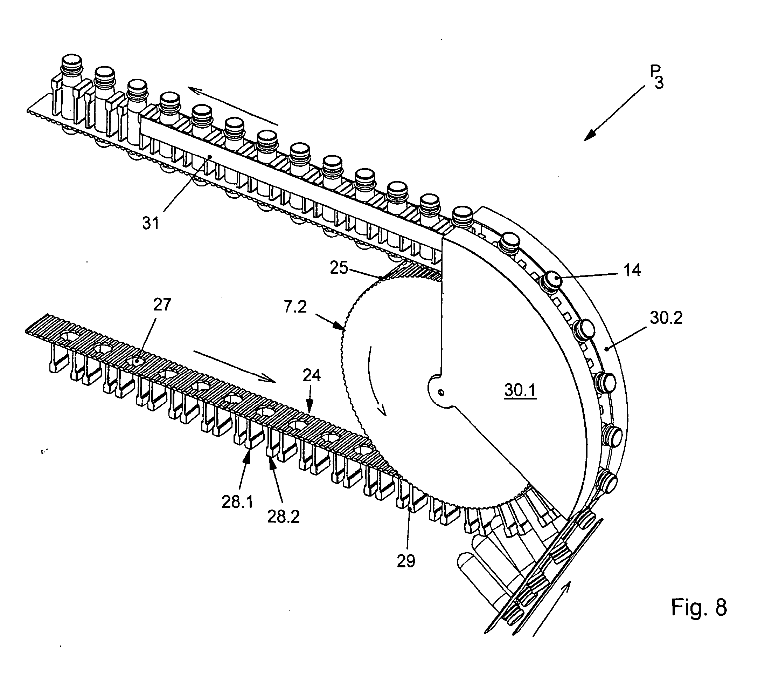

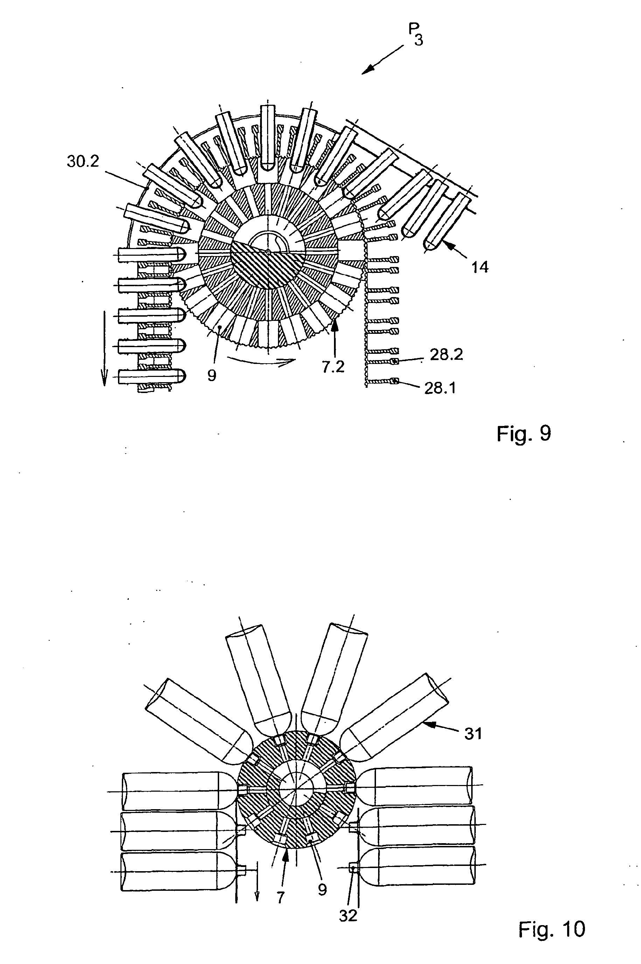

Eine verbesserte Ausführungsform des eben beschriebenen Ausführungsbeispiels ist in den Figuren 8 und 9 beschrieben. Die hier gezeigte erfindungsgemässe Vorrichtung P3 zur Überführung von zylindrischen Körpern weist neben den Öffnungen 27 im Zahnriemen 24 Klemmlamellen auf, wobei je zwei Klemmlamellen 28.1 und 28.2 zwischen sich einen Preform 14 aufnehmen. Um die Klemmwirkung noch zu verbessern, besitzen die Klemmlamellen 28.1 und 28.2 jeweils einen verdickten Kopfstreifen 29.

Wird der Zahnriemen 24 um das Ansaugrad 7.2 mit der Zahnung 25 gelenkt, öffnet sich der Winkel der Klemmlamellen 28.1 und 28.2 und die Preforms können zwischen die Klemmlamellen geschoben werden. Bewegt sich das entsprechende Teilstück des Riemens 24 wieder linear, so wird der Öffnungswinkel der Lamellen verkleinert und die Preforms werden dazwischen geklemmt.

Der Verbesserung der Führung der Preforms 14 dienen im Übergabebereich zwei Stützschalen 30.1 und 30.2 sowie danach entsprechende Stützstreifen 31. Insbesondere die Stützschalen untergreifen den Neckring der Preforms und verhindern so ein zu tiefes Einsaugen der Preforms in die Bohrungen.

In Figur 10 ist angedeutet, dass der zylindrische Körper, hier eine Flasche 31, auch mit seinem Öffnungsbereich von der Bohrung 9 des Rades 7 aufgenommen werden kann. In diesem Fall steckt die Flasche 31 mit ihrem Hals 32 in der Bohrung 9. Ebenso könnte die Flasche 31, bei entsprechender Größe der Bohrung, auch über ihr Bodenteil in der Bohrung 9 aufgenommen werden.

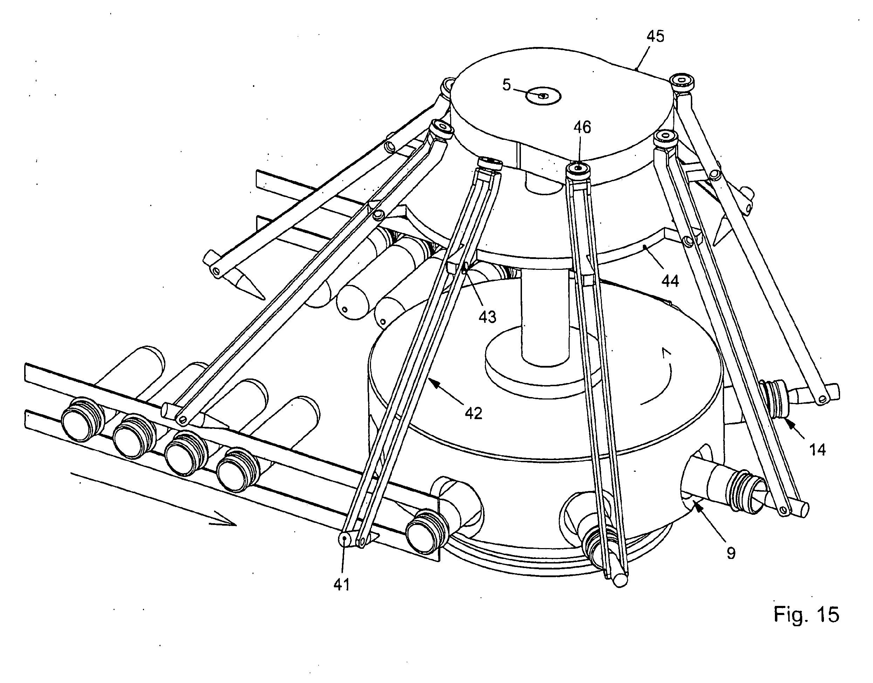

Ein weiterer Gedanke der vorliegenden Erfindung bezieht sich auch darauf, die Körper in oder nach der Übergabeeinrichtung 4 zu behandeln oder optische Kontrollen mittels Kameras durchzuführen. In Figur 15 ist dies in einem Ausführungsbeispiel dargestellt. Mit den sich in den Bohrungen 9 befindenden Preforms 14 dreht eine Behandlungseinrichtung 41 mit, die beispielsweise als Düse zum Einbringen von ionisierter Luft od. dgl. in den Innenraum des Preforms 14 ausgebildet sein kann. Die Behandlungseinrichtung 41 befindet sich an einem Arm 42, der über ein Schwenklager 43 mit einer Drehscheibe 44 verbunden ist. Zusammen mit der Drehscheibe 44 dreht der Arm 42 um die Achse 5, wobei auf der Achse 5 fest eine Kulissenscheibe 45 aufsitzt, gegen die sich ein Rad 46 abstützt, das am anderen freien Ende des Arms 42 gegenüber der Behandlungseinrichtung 41 vorgesehen ist. Diese Kulissenscheibe 45 ist so ausgestaltet, dass die Behandlungseinrichtung 41 je nach Wunsch in den Hohlraum der Preforms 14 eingeführt bzw. aus dem Hohlraum herausgeschwenkt wird.

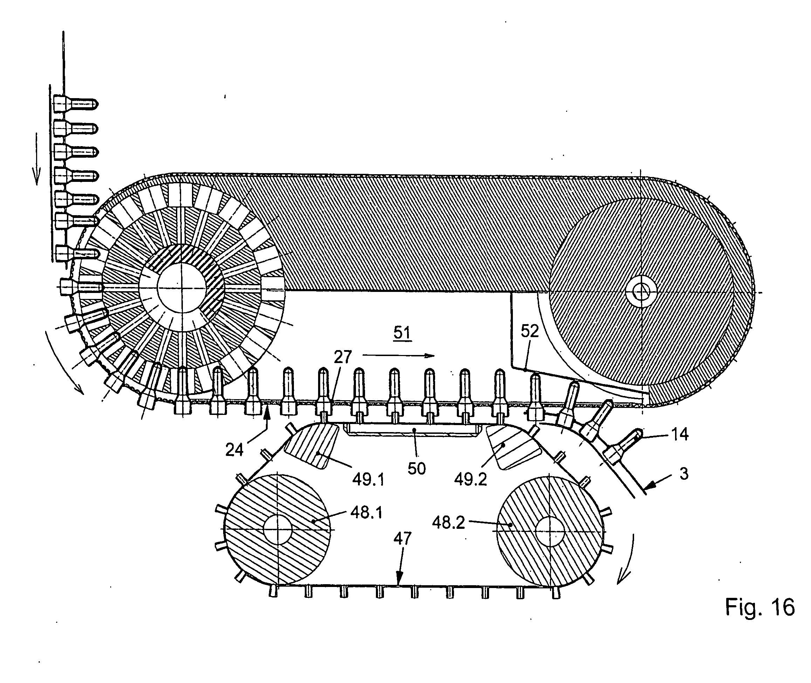

Bei einem weiteren Ausführungsbeispiel einer Nachbehandlung der Preforms gemäss Figur 16 befinden sich Behandlungseinrichtungen 41.1 an einem Endlosband mit Verzahnung 47, welches zwei Umlenkrollen 48.1 und 48.2 umläuft und von zwei Stützsegmenten 49.1 und 49.2 gegen die Preforms 14 geführt wird. Dabei befindet sich zwischen den Stützsegmenten 49.1 und 49.2 eine Druckkammer 50, welche beispielsweise mit ionisierter Luft beaufschlagt werden kann, die dann durch die Düsen 41.1 in den Hohlraum der Preforms 14 eingeblasen wird. Die verzahnten Bänder 27 und 47 laufen synchron zu einander.

Die Preforms 14 befinden sich hier, wie oben zu Figur 7 erwähnt, in den Öffnungen eines Zahnriemens 24, der einen Unterdruckbereich 51 durchläuft, so dass die Preforms 14 in den Öffnungen 27 des Zahnriemens 24 gehalten werden. Nach ihrer Behandlung werden sie mechanisch durch einen Leitstreifen 52 aus den Öffnungen 27 ausgestossen und an eine Abführeinrichtung 3 übergeben. Besonders deutlich ist bei dieser Ausführungsform zu erkennen, dass auch die Möglichkeit besteht, die Preforms in einer Überkopflage durch den herrschenden Unterdruck in dem Zahnriemen 24 zu halten.

### Bezugszeichenliste

| | | | | | |
|---|---|---|---|---|---|
| 1 | Scheibe | 34 | Innenfläche | 67 | |
| 2 | Zufuhreinrichtung | 35 | Ring | 68 | |
| 3 | Abführeinrichtung | 36 | Ringraum | 69 | |
| 4 | Übergabeeinrichtung | 37 | Blattfeder | 70 | |
| 5 | Achse | 38 | Niederhalter | 71 | |
| 6 | Drehrichtung | 39 | Klemmwinkel | 72 | |
| 7 | Rad | 40 | Rinne | 73 | |
| 8 | Mantelfläche | 41 | Behandlungseinrichtung | 74 | |
| 9 | Bohrung | 42 | Arm | 75 | |
| 10 | Öffnung | 43 | Schwenklager | 76 | |
| 11 | Aufnahmekammer | 44 | Drehscheibe | 77 | |
| 12 | Stufe | 45 | Kulissenscheibe | 78 | |
| 13 | Bohrungsabschnitt | 46 | Rad | 79 | |
| 14 | Preform | 47 | Endlosband | | |
| 15 | Raum | 48 | Umlenkrolle | | |
| 16 | Ringraum | 49 | Stützsegment | | |
| 17 | Neckring | 50 | Druckkammer | | |
| 18 | Mulde | 51 | Unterdruckbereich | | |
| 19 | Manteloberfläche | 52 | Leitstreifen | | |
| 20 | Schiebeöffnung | 53 | | | |
| 21 | Sperrflügel | 54 | | A | Drehachse |
| 22 | Doppelpfeil | 55 | | B | Drehachse |
| 23 | Wand | 56 | | | |
| 24 | Zahnriemen | 57 | | P | Vorrichtung |
| 25 | Zahnung | 58 | | | |
| 26 | Stützrolle | 59 | | w | Winkel |
| 27 | Öffnung | 60 | | | |
| 28 | Klemmlamelle | 61 | | | |
| 29 | Kopfstreifen | 62 | | | |
| 30 | Stützschale | 63 | | | |
| 31 | Flasche | 64 | | | |
| 32 | Hals | 65 | | | |
| 33 | Scheibe | 66 | | | |

## Patentansprüche

1. Vorrichtung zur Überführung von hohlen zylindrischen Gegenständen, insbesondere von Preforms (14) oder PET-Flaschen (31), von einer Zufuhreinrichtung (2) zu einer Abführeinrichtung (3) durch Wegnahme der Gegenstände von der Zufuhreinrichtung (2) und Überführung der Gegenstände zu der Abführeinrichtung (3), wobei die Übergabeeinrichtung (4) Bohrungen (9) zur Aufnahme von zumindest einem Teil des zylindrischen Körpers der Gegenstände (14, 31) oder in einer Oberfläche (8.1) Mulden (18) zur Aufnahme der zylindrischen Körper aufweist, wobei diese Mulden (18) über Bohrungen (9.1) und die Bohrungen (9) mit einer Vakuumquelle in Verbindung bringbar sind, wobei die Übergabeeinrichtung (4) als ein um eine Achse (5) drehendes zylindrisches Rad (7, 7.1, 7.2) ausgebildet ist, in dessen Inneren ein Ringraum (16) ausgebildet ist, welcher einen stillstehenden kreissegmentartigen Raum (15, 15.1) umfasst, der mit der Vakuumquelle in Verbindung steht und in den die Bohrungen (9, 9.1) ausmünden, **dadurch gekennzeichnet, dass** in dem kreissegmentartigen Raum (15,15.1) sich ein um die Achse (5) drehbarer Sperrflügel (21) oder Sperrschieber befindet, durch den der Anschluss an die Vakuumquelle veränderbar ist, wodurch das Vakuum den gewünschten Bohrungen (9, 9.1) zuordnenbar ist.

2. Vorrichtung nach Anspruch 1, **dadurch gekennzeichnet, dass** in der Bohrung (9) eine Stufe (12) ausgebildet ist, durch welche die Bohrung (9) auf einen Durchmesser verkleinert ist, der geringer als der Durchmesser des zylindrischen Körpers ist.

3. Vorrichtung nach Anspruch 1 oder 2, **dadurch gekennzeichnet, dass** die Bohrungen (9, 9.1) radial von einer Mantelfläche (8, 8.1) des Rades (7, 7.1, 7.2) nach innen verlaufen,

4. Vorrichtung nach Anspruch 3, **dadurch gekennzeichnet, dass** die Mantelfläche des Rades (7.2) von einem Riemen (24) zumindest teilweise umschlungen ist, wobei sich in dem Riemen (24) Öffnungen (27) befinden, die mit den Bohrungen (9) in dem Rad (7.2) übereinstimmen.

5. Vorrichtung nach Anspruch 4, **dadurch gekennzeichnet, dass** die Mantelfläche des Rades (7.2) mit einer Zahnung (25) belegt und der Riemen als Zahnriemen (24) ausgebildet ist.

6. Vorrichtung nach einem der Ansprüche 3 bis 5, **dadurch gekennzeichnet, dass** ein Drehantrieb für das Rad (7, 7.1, 7.2) einen Antriebsriemen aufweist, der mit dem Rad (7, 7.1, 7.2) eine Rutschkupplung eingeht.

7. Verwendung einer Vorrichtung nach den Ansprüchen 1 bis 6 zur Überführung von hohlen zylindrischen Gegenständen, insbesondere von Preforms (14) oder PET-Flaschen (31), von einer Zufuhreinrichtung (2) zu einer Abführeinrichtung (3) durch Wegnahme der Gegenstände von der Zufuhreinrichtung (2) und Überführung der Gegenstände zu der Abführelnrichtung (3), **dadurch gekennzeichnet, dass** ein Körper des hohlen Gegenstandes (14, 31) zumindest teilweise in eine Übergabeeinrichtung (4) einfährt, dort pneumatisch und/oder mechanisch gehalten und von der Abführeinrichtung (3) wieder aus der Übergabeeinrichtung (4) gezogen oder gedrückt wird.

8. Verwendung nach Anspruch 7, **dadurch gekennzeichnet, dass** auf den Körper des Gegenstandes (14, 31) in der Übergabeeinrichtung (4) ein Saugdruck ausgeübt wird.

9. Verwendung nach Anspruch 7 oder 8, **dadurch gekennzeichnet, dass** zumindest ein Teil des zylindrischen Körpers von einer diesen zylindrischen Körper angepassten Öffnung (9) in der Übergabeeinrichtung (4) aufgenommen wird.

10. Verwendung nach Anspruch 7 oder 8, **dadurch gekennzeichnet, dass** zumindest ein Teil des zylindrischen Körpers von einer in eine Oberfläche (8.1) der Übergabeeinrichtung eingeformten Mulde (18) aufgenommen wird.

11. Verwendung nach wenigstens einem der Ansprüche 7 bis 10 **dadurch gekennzeichnet, dass** die pneumatische und/oder mechanischer Halterung vor dem Angriff der Abführeinrichtung (3) zumindest teilweise wieder aufgehoben wird.

## Claims

1. A device for transferring hollow cylindrical objects, in particular preforms (14) or PET bottles (31), from a supply means (2) to a discharge means (3) by removing the objects from the supply means (2) and transferring the objects to the discharge means (3), the transfer means (4) having bores (9) for receiving at least part of the cylindrical body of the objects (14, 31) or in a surface (8.1) troughs (18) for receiving the cylindrical bodies, these troughs (18) being able to be connected via bores (9.1) and the bores (9) being able to be connected to a vacuum source, the transfer means (4) being formed as a cylindrical wheel (7, 7.1, 7,2) which rotates about an axle (5), in the interior of which wheel an annular space (16) is formed which comprises a stationary circular-segment-like space (15, 15.1) which is connected to the vacuum source and into which the bores (9, 9.1) open, **characterised in that** a blocking vane (21) or blocking slider which is rotatable about the axle (5) is located in the circular-segment-like space (15, 15.1), by means of which vane or slider the connection to the vacuum source can be changed, which means that the vacuum can be associated with the desired bores (9, 9.1).

2. A device according to Claim 1, **characterised in that** a step (12) is formed in the bore (9), by means of which step the bore (9) is reduced to a diameter which is smaller than the diameter of the cylindrical body.

3. A device according to Claim 1 or 2, **characterised in that** the bores (9, 9.1) extend radially inwards from a generated surface (8, 8.1) of the wheel (7, 7.1, 7.2).

4. A device according to Claim 3, **characterised in that** the generated surface of the wheel (7.2) has a belt (24) wound around it, at least in part, there being openings (27) in the belt (24) which match the bores (9) in the wheel (7.2).

5. A device according to Claim 4, **characterised in that** the generated surface of the wheel (7.2) is equipped with teeth (25) and the belt is formed as a toothed belt (24).

6. A device according to one of Claims 3 to 5, **characterised in that** a rotary drive for the wheel (7, 7.1, 7.2) has a drive belt which forms a sliding clutch with the wheel (7, 7.1, 7.2).

7. Use of a device according to Claims 1 to 6 for transferring hollow cylindrical objects, in particular preforms (14) or PET bottles (31), from a supply means (2) to a discharge means (3) by removing the objects from the supply means (2) and transferring the objects to the discharge means (3), **characterised in that** a body of the hollow object (14, 31) enters at least partially into a transfer means (4), is held pneumatically and/or mechanically there and is drawn or pushed out of the transfer means (4) again by the discharge means (3).

8. Use according to Claim 7, **characterised in that** a suction pressure is exerted on the body of the object (14, 31) in the transfer means (4).

9. Use according to Claim 7 or 8, **characterised in that** at least a part of the cylindrical body is received by an opening (9) in the transfer means (4) adapted to this cylindrical body.

10. Use according to Claim 7 or 8, **characterised in that** at least a part of the cylindrical body is received by a trough (18) formed in a surface (8.1) of the transfer means.

11. Use according to at least one of Claims 7 to 10, **characterised in that** the pneumatic and/or mechanical holding is at least partially cancelled out before the discharge means (3) comes into action.

## Revendications

1. Dispositif de transfert d'objets cylindriques creux, en particulier de préformes (14) ou de bouteilles en PET (31), d'un dispositif d'alimentation (2) vers un dispositif d'évacuation (3) par enlèvement des objets du dispositif d'alimentation (2) et transfert des objets vers le dispositif d'évacuation (3), le dispositif de transfert (4) présentant des alésages (9) destinés à recevoir au moins une partie du corps cylindrique des objets (14, 31) ou, dans une surface (8.1), des cuvettes (18) destinées à recevoir les corps cylindriques, ces cuvettes (18) pouvant être amenées en communication par l'intermédiaire d'alésages (9.1) et les alésages (9) avec une source de vide, le dispositif de transfert (4) étant réalisé sous forme de roue cylindrique (7, 7.1, 7.2), tournant autour d'un axe (5), à l'intérieur de laquelle est formé un espace annulaire (16) qui comporte un espace en forme de segment de cercle stationnaire (15, 15.1) qui est en communication avec la source de vide et dans lequel aboutissent les alésages (9, 9.1), **caractérisé par le fait que** dans l'espace en forme de segment de cercle stationnaire (15, 15.1) se trouve un clapet de blocage (21) ou un tiroir de blocage rotatif autour de l'axe (5) par lequel le raccordement à la source de vide peut être modifiée, d'où le vide peut être associé aux alésages désirés (9, 9,1).

2. Dispositif selon la revendication 1, **caractérisé par le fait que** dans l'alésage (9) est réalisé un palier (12) par lequel l'alésage (9) est réduit à un diamètre qui est plus petit que le diamètre du corps cylindrique.

3. Dispositif selon la revendication 1 ou 2, **caractérisé par le fait que** les alésages (9, 9.1) s'étendent radialement d'une surface d'enveloppe (8, 8.1) de la roue (7, 7.1, 7.2) vers l'intérieur.

4. Dispositif selon la revendication 3, **caractérisé par le fait que** la surface d'enveloppe de la roue (7.2) est entourée au moins partiellement par une courroie (24), dans la courroie (24) se trouvant des ouvertures (27) qui coïncident avec les alésages (9) dans la roue (7.2).

5. Dispositif selon la revendication 4, **caractérisé par le fait que** la surface d'enveloppe de la roue (7.2) est occupée par une denture (25) et que la courroie est réalisée sous forme de courroie dentée (24).

6. Dispositif selon l'une des revendications 3 à 5, **caractérisé par le fait qu'**un entraînement en rotation de la roue (7, 7.1, 7.2) présente une courroie d'entraînement qui constitue avec la roue (7,7,1, 7.2) un couplage glissant.

7. Utilisation d'un dispositif selon les revendications 1 à 6 pour le transfert d'objets cylindriques creux, en particulier de préformes (14) ou de bouteilles en PET (31), d'un dispositif d'alimentation (2) vers un dispositif d'évacuation (3) par enlèvement des objets du dispositif d'alimentation (2) et transfert des objets vers le dispositif d'évacuation (3), **caractérisée par le fait qu'**un corps de l'objet creux (14, 31) entre au moins partiellement dans un dispositif de transfert (4), y est maintenu pneumatiquement et/ou mécaniquement et est à nouveau tiré ou poussé par le dispositif d'évacuation (3) hors du dispositif de transfert (4).

8. Utilisation selon la revendication 7, **caractérisée par le fait que** sur le corps de l'objet (14, 31) dans le dispositif de transfert (4) est exercée une pression d'aspiration.

9. Utilisation selon la revendication 7 ou 8, **caractérisée par le fait qu'**au moins une partie du corps cylindrique est reçue par une ouverture (9) dans le dispositif de transfert (4) adaptée à ces corps cylindriques.

10. Utilisation selon la revendication 7 ou 8, **caractérisée par le fait qu'**au moins une partie du corps cylindrique est reçue par une cuvette (18) formée dans une surface (8.1) du dispositif de transfert.

11. Utilisation selon au moins l'une des revendications 7 à 10, **caractérisée par le fait que** le support pneumatique et/ou mécanique est, avant l'attaque du dispositif d'évacuation (3), à nouveau soulevé au moins partiellement.
